# EUROPEAN PATENT APPLICATION

(11) **EP 3 392 397 A1**
(43) Date of publication of application: **24.10.2018**
(21) Application number: 16874673.3
(22) Date of filing: 08.11.2016
(51) Int. Cl.: D06F 58/22, D06F 58/24

(54) **EFFICIENT WASHER-DRYER AND CONTROL METHOD**

(30) Priority: 15.12.2015 CN 201510938464
(71) Applicant: Qingdao Haier Drum Washing Machine Co., Ltd., Shandong 266101 (CN)
(72) Inventor: LAO, Chunfeng, Qingdao Shandong 266101 (CN); LI, Yimin, Qingdao Shandong 266101 (CN); XU, Yonghong, Qingdao Shandong 266101 (CN); ZHANG, Huacheng, Qingdao Shandong 266101 (CN)
(74) Representative: Beck & Rössig European Patent Attorneys
(86) International application number: PCT/CN2016/105078
(87) International publication number: WO 2017/101616

(57) **Abstract**

An efficient washer-dryer and a control method are provided. The efficient washer-dryer comprises a laundry accommodating drum (3), a drying air duct (4) arranged outside and communicated with the laundry accommodating drum (3), and a condensing device (5) provided with a heat-absorbing portion and a heat-releasing portion. The heat-absorbing portion is arranged in the drying air duct (4), and the heat-releasing portion is arranged outside the drying air duct (4). At least a nozzle spraying water towards the condensing device (5) and a drain outlet (14) communicated with an exterior of the drying air duct (4) are arranged inside the drying air duct (4). The control method of the washer-dryer comprises: at least after a drying process, supplying water to the nozzle (6) to flush the dirt attached on the condensing device (5), and discharging flushed water and dirt out of the drying air duct (4) through the drain outlet (14). The condensing efficiency of the washer-dryer is significantly improved, drying time is shortened, and a good energy-saving effect is achieved. Meanwhile, the heat exchange efficiency of the condensing device (5) is guaranteed, and a healthy effect of saving energy and reducing consumption is achieved.

## Description

### TECHNICAL FIELD

The present disclosure relates to a household appliance, in particular, to an efficient washer-dryer and a control method.

### BACKGROUND

When a dyer is drying the laundry, the air is firstly heated by a heater, and the hot air is driven by a fan into a washing drum and heats the residual moisture in the laundry into the water vapor. The water vapor enters a condensing channel, with the hot air driven by the fan, and the water vapor is condensed into liquid water inside the condensing channel and is discharged. Then the relative-dry air is heated by the heater and enters the washing drum again to participate in the drying cycle. After a certain time of cycle process, the laundry is dried.

For the existing washer-dryer, a condensing device, such as a heat exchanger pipe or a heat exchanger sheet, is arranged inside the dryer cycle path. Since some clothing threads and other dirties reaches and adheres to the condensing device during the drying process along with the circulating air flow, it will cause the accumulation of the threads and the dirties on the condensing device. And that will gradually reduce the condensing efficiency and cause bacteria breeding.

In view of this, the present disclosure is proposed.

### SUMMARY

An object of the present disclosure is to overcome the shortcomings of the prior art, and provide an efficient washer-dryer capable of self-cleaning an internal condensing device.

Another object of the present disclosure is to provide a control method of the efficient washer-dryer.

In order to achieve the above object of the disclosure, the technical scheme is adopted by the present disclosure as follows:
An washer-dryer, comprising a laundry accommodating drum, a drying air duct arranged outside and communicated with the laundry accommodating drum and a condensing device,
further, the condensing device is provided with a heat-absorbing portion and a heat-releasing portion, the heat-absorbing portion is arranged in the drying air duct to absorb heat of air in the drying air duct and condense moisture of air, and the heat-releasing portion is arranged outside the drying air duct to dissipate the heat absorbed by the heat-absorbing portion;
the drying air duct are at least provided with a nozzle and a drain outlet inside, the nozzle is for spraying water to the heat-absorbing portion of the condensing device, and the drain outlet is communicated with the exterior of the drying air duct.

Further, the condensing device comprises a heat pipe group with an evaporation section and a condensation section, a first heat exchanger sheet group arranged in the evaporation section of the heat pipe group, and a second heat exchanger sheet group arranged in the condensation section of the heat pipe group.

The evaporation section and the first heat exchanger sheet group form the heat-absorbing portion of the condensing device, and the condensation section and the second heat exchanger sheet group form the heat-releasing portion of the condensing device.

Further, a heat exchanger sheet of the first heat exchanger sheet group is vertically and uniformly distributed inside the drying air duct. The nozzle is arranged above the first heat exchanger sheet group. A flowing direction of a water outlet of the nozzle is parallel to the heat exchanger sheet, and a water inlet of the nozzle is arranged outside the drying air duct to connect with a water supply pipe of the washer-dryer.

Further, a guiding structure is arranged at the water outlet of the nozzle for allowing water from the water outlet to fully cover the heat exchanger sheet.

Further, the drying air duct has an air supply opening and an air return opening. The air supply opening and the air return opening are arranged at diagonal positions of the laundry accommodating drum. Both the evaporation section of the heat pipe group and the first heat exchanger sheet group are arranged in a section of the drying air duct near to the air return opening.

Further, the condensing device further comprises a heat-dissipating fan, and the heat-dissipating fan is arranged at the condensation section of the heat pipe group and the second heat exchanger sheet group for improving the heat dissipation of the condensation section of the heat pipe group and the second heat exchanger sheet group.

Further, the efficient washer-dryer comprises a heating device arranged in the drying air duct, and the heating device is arranged downstream from the condensing device. A fan is arranged in the drying air duct to drive drying air flow to circulate between the drying air duct and the laundry accommodating drum.

A control method of the efficient washer-dryer, comprising: at least after the drying process, supplying water to the nozzle to flush dirty attached to the condensing device, and discharging the flushing water and the dirty out of the drying air duct through the drain outlet.

Further, the control method of the efficient washer-dryer further comprises firstly heating the flushing water supplied to the nozzle, and/or supplying water to the nozzle in an intermittent manner, before supplying water to the nozzle.

The control method of the efficient washer-dryer, comprising supplying water to the nozzle at an earlier stage of drying process, and distributing water to the condensing device to condense moisture of air discharged from the laundry accommodating drum.

The control method of the efficient washer-dryer, comprising supplying water to the nozzle at a later stage of drying process, and distributing water to the condensing device to cool the air discharged from the laundry accommodating drum.

By adopting the technical scheme of the present disclosure, it brings the following benefits:
the efficient washer-dryer and the control method of the present disclosure adopts the means that the nozzle spraying water toward the condensing device is arranged in the drying air duct of the washer-dryer, so as to remove the threads and other dirty attached to the heat exchanger pipe or the heat exchanger sheet of the condensing device. The heat exchange efficiency is ensured, and the bacteria breed on the condensing pipe and the condensing device is inhibited, and the purpose of energy-save, consumption reduction and health is achieved. At the same time, the washer-dryer of the present disclosure condenses the hot air in the drying air duct by taking advantage of heat pipe technology. and that has the characteristics of low energy consumption, compact structure, good drying effect and strong practicality.

### BRIEF DESCRIPTION OF THE DRAWINGS

Fig.1 is a schematic strcuture diagram of the present disclosure;
Fig.2 is a structure schematic diagram of the present disclosure after removing a enclosure;
Fig.3 is a structure schematic diagram of Fig.2 after removing part of a duct wall of a drying air duct;
Fig.4 is a structure schematic diagram of a condensing device of the present disclosure;
Fig.5 is a location schematic diagram of the condensing device in the drying air duct of the present disclosure;
Fig.6 is a structure schematic diagram of a nozzle of the present disclosure.

Wherein: 1.enclosure 2.door body 3.laundry accommodating drum 4.drying air duct 5.condensing device 6.nozzle 7.driving device 8.heating device 9.fan 10.heat pipe group 11.first heat exchanger sheet group 12.second heat exchanger sheet group 13.heat-dissipating fan 14.drain outlet 41.air supply opening 42.air return opening 61.water inlet 62.water outlet 63.guiding structure.

### DETAILED DESCRIPTION

The following is further described in details with embodiments of the present disclosure with accompanying drawings.

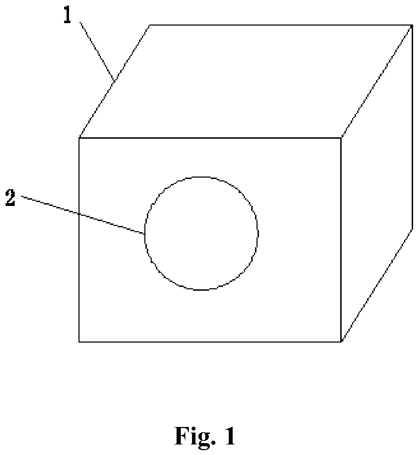

As shown in Fig.1, an efficient washer-dryer comprises an enclosure 1 provided with a laundry pick-and-place hole for delivering the laundry and taking out the laundry. A door body 2 connecting with the enclosure 1 is arranged at the pick-and-place hole to selectively open and/or close the pick-and-place hole.

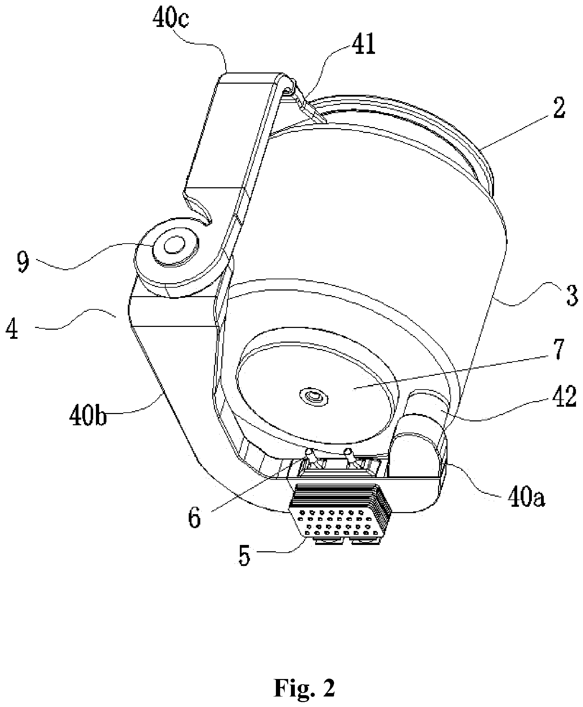

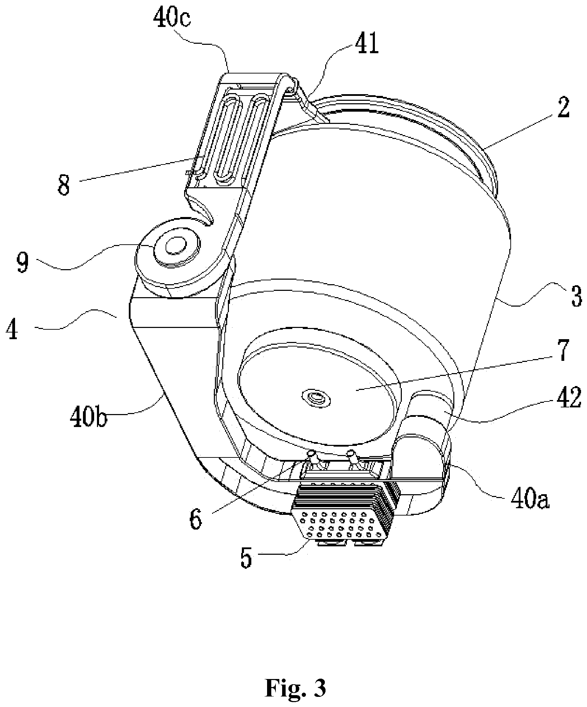

As shown in Fig.2 and Fig.3, the efficient washer-dryer also comprises a laundry accommodating drum 3, a driving device 7 and a drying air duct 4 arranged inside the enclosure 1, and a heating device 8 arranged inside the drying air duct 4. The drying air duct 4 is arranged outside and communicated with the laundry accommodating drum 3. The laundry accommodating drum 3 comprises an outer drum and an inner drum (not shown in figures) for containing the laundry to be dried. The driving device 7 for controllably driving the inner drum to rotate is installed on one closed end of the laundry accommodating drum 3, so that the inner drum is rotatably arranged inside the outer drum. Specifically, the driving device 7 may be a driving motor 7. The drying air duct 4 is used for blowing the drying air flow into the laundry accommodating drum 3 during a drying process to dry the laundry inside the laundry accommodating drum 3.

In particular, the efficient washer-dryer also comprises a condensing device 5 provided with a heat-absorbing portion and a heat-releasing portion. The heat-absorbing portion is arranged inside the drying air duct 4 to absorb the heat of the air in the drying air duct 4 and condense moisture of air. The heat-releasing portion is arranged outside the drying air duct 4 to dissipate the heat absorbed by the heat-absorbing portion.

At least a nozzle 6 spraying water toward the heat-absorbing portion of the condensing device 5 and a drain outlet 14 communicated with the exterior of the drying air duct 4 are arranged inside the drying air duct 4. Since the air flowing out of the laundry accommodating drum 3 carries a large of water vapor, the water vapor carried in the air is condensed into liquid water after the heat of the air is absorbed by the condensing device 5 to make the condensed air become relatively drier, and then enter into the laundry accommodating drum 3 again for the laundry drying.

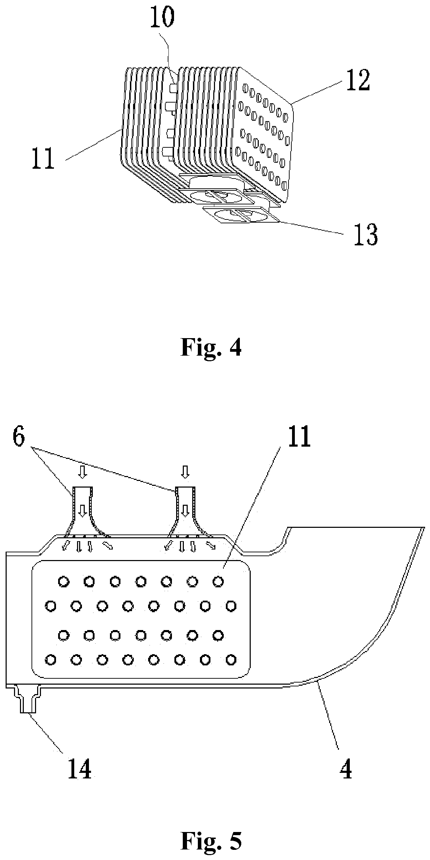

As shown in Fig.4, the condensing device 5 comprises a heat pipe group 10 provided with an evaporation section and a condensation section, a first heat exchanger sheet group 11 is arranged in the evaporation section of the heat pipe group 10, and a second heat exchanger sheet group 12 is arranged in the condensation section of the heat pipe group 10. Specifically, the first heat exchanger sheet group 11 and the second heat exchanger sheet group 12 is respectively composed of multiple parallel assembled heat exchanger sheet, and a through-hole is arranged on the corresponding position of the multiple heat exchanger sheet. The heat pipe group 10 is composed of multiple heat pipes which are in side-by-side manner and have common evaporator section and condensation section. The evaporation section passes through the through-holes of the first heat exchanger sheet group 11, and is fixedly assembled with the heat exchanger sheet. Similarly, the condensation section passes through the through-holes of the second heat exchanger sheet group 12, and is fixedly assembled with the heat exchanger sheet. The evaporation section and the first heat exchanger sheet group 11 form the heat-absorbing portion of the condensing device 5, and the condensation portion and the second heat exchanger sheet group 12 form the heat-releasing portion of the condensing device 5.

Specifically, the evaporation section of the heat pipe group 10 and the first heat exchanger sheet group 11 are located inside the drying air duct 4 to absorb the heat of the air in the drying air duct 4 and condense moisture of air. The condensation section of the heat pipe group 10 and the second heat exchanger sheet group 12 are located outside the drying air duct 4 to dissipate heat from the evaporation section of the heat pipe group 10 and the first heat exchanger sheet 11. The heat exchanger sheet can enlarge the contact area between the heat pipe group 10 and the air, and the heat transfer is rapid and the heat exchange efficiency is improved.

The heat pipe is a heat transfer device, which fully utilizes the principle of heat conduction and rapid heat transfer property of the phase change medium. The heat of the heat generation object is quickly transferred to the exterior of the heat source through the heat pipe of which the thermal conductivity exceeds the thermal conductivity of any known metal. The heat pipe can be divided into three sections, namely evaporation section, adiabatic section and condensation section, based on its working characteristics. When the evaporation section of the heat pipe is heated, the working fluid is heated and evaporates. The steam flows along a steam chamber to the condensation section of the heat pipe under the action of the pressure difference, and condenses and releases the latent heat in the condensation section. The heat is transferred through a wick filled with the working fluid and a pipe wall of the condensation section. Then the heat transfer from the high temperature to the low temperature is completed, and the condensation liquid flows back to the evaporation section under the action of the capillary suction force of the wick. Repeating the cycle again and again, it can continuously transfer heat from high temperature to low temperature. In the embodiment of the present disclosure, the condensing device 5 adopting the heat pipe can quickly dissipate the heat from the heat and humid air in the laundry accommodating drum 3, which has the advantages of higher condensation efficiency and lower energy consumption.

Further, the pipe body material of the heat pipe can be copper, copper alloy, aluminum, aluminum alloy, stainless steel or other materials, to ensure the heat conduction efficiency of the condensing device 5.

As shown in Fig.5, preferably, the heat exchanger sheets of the first heat exchanger sheet group 11 are vertically and uniformly distributed inside the drying air duct 4. The nozzle 6 is arranged above the first heat exchanger sheet 11, and the flowing direction of the water outlet 62 of the nozzle is set to be parallel to the extending direction of the heat exchanger sheet. The water inlet 61 of the nozzle is arranged outside the drying air duct 4 to connect with a water supply pipe of the washer-dryer. A water supply valve is arranged in the water supply pipe, the water valve is controlled to open and close the water supply pipe. Since the nozzle 6 is arranged above the heat exchanger sheet, the water sprayed from the nozzle 6 flushes the heat exchanger sheet from top to bottom, so that the threads and the dirty remaining on the heat exchanger sheet are easier to be flushed under the double action of the impact force of the water flow and the gravity, and are eventually discharged through the drain outlet 14 on the bottom of the drying air duct 4.

Preferably, the number of the nozzle 6 is two or more, so that the water-spraying area can completely cover the surface of the heat exchanger sheet.

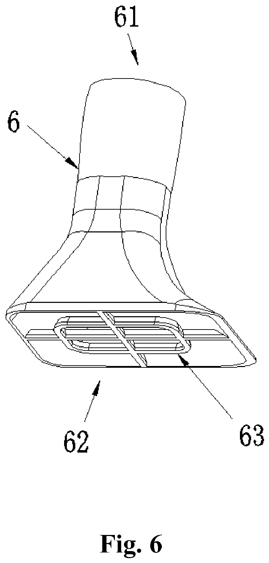

As shown in Fig.6, preferably, a guiding structure 63 is arranged at the water outlet 62 of the nozzle 6. The guiding structure 63 enables the water flow sprayed from the nozzle 6 to act on the surface of the heat exchanger sheet in a radial manner, so that the function area of the flushing water can fully cover the surface of the heat exchanger sheet. Then a better flushing effect is achieved.

In the embodiment of the present disclosure, the drying air duct 4 is provided with an air supply opening 41 and an air return opening 42. The air supply opening 41 is located on an upper part of the front side of the outer drum, and not on a highest position, and the air return opening 42 of the drying air duct 4 is located on the lower part of the rear side of the outer drum, and not on a lowest position. The upper part of lateral of the front side of the outer drum is diagonal to the lower bottom part of lateral of the rear side of the outer drum. That is, the air supply opening 41 and the air return opening 42 can be roughly located on two corner positions of the diagonal line of the axial section across the central axis of the outer drum. Therefore, the hot air of the laundry accommodating drum 3 from the air supply opening 41 can flow through the path in the laundry accommodating drum 3 as long as possible to increase the contact time of the hot air and the laundry to be dried in the laundry accommodating drum 3. Thereby the drying effect is improved and the drying time is reduced. Specifically, the air supply opening 41 is located in the upper part of lateral of the drum neck of the outer drum, and not on a highest position. And the air return opening 42 is located in the lower part of the drum bottom of the outer drum, and not on a lowest position, and near the edge of the drum bottom of the outer drum. In other embodiments of the present disclosure, in order to facilitate the installation of the drying air duct 4 and other structures in the enclosure 1, the air supply opening 41 and air return opening 42 can also located on other diagonal positions of the outer drum.

The condensing device 5 also comprises a heat-dissipating fan 13, heat-dissipating fan 13 is arranged at the condensation section of the heat pipe group 10 and the second heat exchanger sheet group 12 for improving the heat dissipation of the condensation section of the heat pipe group 10 and the second heat exchanger sheet group 12. The heat-dissipating fan 13 can be an axial flow fan of which the blowing direction is the same with the extending direction of the heat exchanger sheet of the second heat exchanger sheet group 12. Specifically, the condensation section of the heat pipe group 10 and the second heat exchanger sheet group 12 can be arranged outside the drying air duct 4 and located in the environment space inside the enclosure 1. The air temperature of the environment space is relatively lower. Therefore it ensures that the heat can be efficiently dissipated, and the condensing efficiency of the condensing device 5 is further improved.

In order to allow the air to quickly and efficiently flow between the laundry accommodating drum 3 and the drying air duct 4, the washer-dryer also comprises a fan 9 in the embodiment of the present disclosure. The fan 9 is arranged in the drying air duct 4 and located downstream from the condensing device 5. The fan 9 is used to drive the drying air flow to flow between the drying air duct 4 and the laundry accommodating drum 3 to accelerate the drying process.

In the embodiment of the present disclosure, the washer-dryer also comprises a heating device 8, to enable make the drying air flow to more efficiently evaporate the moisture in the laundry. The heating device 8 is arranged in the drying air duct 4 and located downstream from the condensing device 5, and configured to heat the air flowing through there, so that the air becomes the hot air whose temperature is higher than the environment temperature. That is, the heating device 8 can increase the temperature of the drying air flow entering the laundry accommodating drum 3. The heating device 8 is arranged in the drying air duct 4 and located downstream from the condensing device 5, namely, the air flow from the laundry accommodating drum 3 is firstly condensed by the condensing device 5, and then the condensed air flow is heated by the heating device 8. That can avoid the moisture in the air flow from the laundry accommodating drum 3 is evaporated again during the heating process and enters the laundry accommodating drum 3 to influence the drying effect.

Further, the heating device can controllably and intermittently heat the air flowing therethrough there. For example, when the temperature of the drying air flow supplied into the laundry accommodating drum 3 is higher than the first preset temperature, the heating device 8 can be turned off to avoid the damage to the laundry caused by excessively high temperature of the drying air flow. When the temperature of the drying air flow supplied into the laundry accommodating drum 3 is lower than the second preset temperature, the heating device 8 can be turned on to continue heating the air flowing through there. In the embodiment of the present disclosure, the first preset temperature can be, for example, 130°C, and the second preset temperature can be, for example, 90°C.

In the embodiment of the present disclosure, the drying air duct 4 can comprise an upstream section 40a provided with the condensing device 5, a downstream section 40c provided with the fan 9 and the heating device 8, and a middle section 40b between the upstream section 40a and the downstream section 40b. The upstream section 40a is directly communicated with the air return opening 42, and the downstream section 40b is directly communicated with the air supply opening 41. The downstream section 40c extends along in the direction parallel to the central axis of the laundry accommodating drum 3, and at least a portion of the middle section 40b is perpendicular to the downstream section 40c. Therefore, it can avoid that the drying air duct 4 has a turning with a relatively large angle, so that the drying air flow can quickly flow in the drying air duct 4.

Specifically, the downstream section 40c of the drying air duct 4 can be located above on upper side of the lateral of the laundry accommodating drum 3, and roughly extends along the horizontal direction. The fan 9 is located in the front end of the downstream section 40c and adjacent to the middle section 40b. The heating device 8 is located downstream from the fan 9. The downstream section 40c of the drying air duct 4 can roughly be compressed and tubular, and the heating device 8 can be an S-shaped tubular heater which is fixed inside the downstream section 40c. The middle section 40b and the downstream section 40c of the drying air duct 4 can roughly compose an L-shaped air duct. At least a portion of the middle section 40b is perpendicular to the downstream section 40c and extends downward, and the upstream section 40a is perpendicular to the central axis of the laundry accommodating drum 3 and extends in the horizontal plane.

Embodiment 1 of a control method of the washer-dryer of the present disclosure A control method comprises: at least after the drying process, supplying water to the nozzle 6 to flush the dirty attached to the condensing device 5, and discharging the flushing water and the dirty out of the drying air duct 4 through the drain outlet 4. Specifically, after the drying process is finished, the fan 9 stops working functioning, and the cleaning process is started when the in-machine air cooling is started. The cleaning process is, the water supply valve works in a intermittent manner so that the cleaning process is an intermittent cleaning, namely, firstly flushing for 5 to 15 seconds, stopping for 5 to 15 seconds, then flushing for 5 to 15 seconds, stopping for 5 to 15 seconds again, and after several intermittent flushes, continuously flushing for 20 to 30 seconds with higher water pressure and larger water amount. The advantages of this setting is that firstly the threads are soaked and the attached dirty are dissolved by the intermittent flushing, and then the threads and the dirty are flushed through the external force applied by the continuous water flow. Thereby the optimum cleaning effect is ensured.

Embodiment 2 of the control method of the washer-dryer of the present disclosure The control method comprises supplying water to the nozzle 6 at least after the drying process to flush the dirty attached to the condensing device 5, and discharging the flushing water and the dirty out of the drying air duct 4 through the drain outlet 4. Specifically, after the drying process is finished, the fan 9 stops working, and the cleaning process is started when the in-machine air cooling is started. The cleaning process is that the cleaning water is preheated, inside the machine, by the heating device and then is supplied to the nozzle 6 by the water supply pipe, and flushes the heat pipe group and the heat exchanger sheet through the water outlet 62 of the nozzle 6. The advantages of this setting is that the tepid water flow after heated can quickly dissolve the attached dirty, and then flushes away the dirty and the threads quickly. Thereby the optimum cleaning effect is ensured. The amount of the flushing water is generally 2 to 4 liters, so that heating by the low-power heating device for a short time can meet the cleaning demand. The effect of low energy consumption is achieved.

Embodiment 3 of the control method of the washer-dryer of the present disclosure The control method comprises supplying water to the nozzle 6 at an earlier stage of drying process, distributing water to the condensing device 5, and condensing the air discharged from the laundry accommodating drum 3, and spraying water toward the condensing device 5 to realize the role of assisting condensation. Specifically, at the earlier stage of drying process, the water supply valve is opened to supply water to the nozzle 6, and a small amount of cold water is sprayed toward the upstream section 40a for condensing the water vapor. Since the hot and humid air needs a period time to reach a higher temperature, during this period of time, the heat pipe group 10 cannot fully condense the water vapor due to a small temperature difference between the hot and humid air and the outside environment. Therefore, the condensation effect can be effectively improved by spraying a small amount of cold water toward the upstream section 40a.

Embodiment 4 of the control method of the washer-dryer of the present disclosure The control method comprises supplying water to the nozzle 6 at a later stage of drying process, distributing water to the condensing device 5 to cool the air discharged from the laundry accommodating drum 3, and spraying water toward the condensing device 5 to realize the role of assisting condensation. Specifically, at the later stage of drying stage, that is, after the laundry is dried, the heating device 8 is firstly turned off and the fan 9 is continued to work. At the same time the water supply valve is opened to supply water to water to the nozzle 6, and a small amount of cold water is sprayed toward the upstream section 40a for reducing the temperature in the outer drum and the drying air duct. Since the air discharged from the outer drum still has a higher temperature after the laundry is dried, it should take a period of time to cool down, and it is generally not suitable to directly open the outer drum in this period of time. Therefore, the temperature in the laundry accommodating drum 3 can be reduced quickly by spraying a small amount of cold water toward the upstream section 40a and by the circulation of the fan 9.

It is to be understood by one skilled in the art that embodiment 1 and embodiment 2, or embodiment 1, embodiment 3 and embodiment 4, or embodiment 3 and embodiment 4 of the above control method of the efficient washer-dryer can be mutually combined to achieve a better usage effect.

It is to be understood by one skilled in the art that the 'upstream' and the 'downstream' described in the above embodiments of the present disclosure are in terms of the flowing direction of the air.

While there has been shown several embodiments of the present disclosure, it is to be understood that various of variants and improvement can be made as would known to one skilled in the art without departing from the underlying scope of the present invention as is discussed and set forth above and below including claims.

## Claims

1. An efficient washer-dryer, comprising a laundry accommodating drum, a drying air duct arranged outside and communicated with the laundry accommodating drum, and a condensing device, wherein,
the condensing device is provided with a heat-absorbing portion and a heat-releasing portion, the heat-absorbing portion is arranged in the drying air duct to absorb heat of air in the drying air duct and condense moisture of air,
the heat-releasing portion is arranged outside the drying air duct to dissipate the heat absorbed by the heat-absorbing portion;
the drying air duct are at least provided with a nozzle and a drain outlet inside, the nozzle is for spraying water to the heat-absorbing portion of the condensing device, and the drain outlet is communicated with an exterior of the drying air duct.

2. The efficient washer-dryer according to claim 1, wherein the condensing device comprises a heat pipe group with an evaporation section and a condensation section, a first heat exchanger sheet group arranged in the evaporation section of the heat pipe group, and a second heat exchanger sheet group arranged in the condensation section of the heat pipe group,
the evaporation section and the first heat exchanger sheet group form the heat-absorbing portion of the condensing device, and the condensation section and the second heat exchanger sheet group form the heat-releasing portion of the condensing device.

3. The efficient washer-dryer according to claim 2, wherein a heat exchanger sheet of the first heat exchanger sheet group is vertically and uniformly distributed inside the drying air duct, the nozzle is arranged above the first heat exchanger sheet group, and a flowing direction of a water outlet of the nozzle is parallel to the heat exchanger sheet, a water inlet of the nozzle is arranged outside the drying air duct to connect with a water supply pipe of the washer-dryer.

4. The efficient washer-dryer according to claim 3, wherein a guiding structure is arranged at the water outlet of the nozzle for allowing water from the water outlet to fully cover the heat exchanger sheet.

5. The efficient washer-dryer according to claim 2, wherein the drying air duct is provided with an air supply opening and an air return opening, the air supply opening and the air return opening are arranged at diagonal positions of the laundry accommodating drum, both the evaporation section of the heat pipe group and the first heat exchanger sheet group are arranged in a section of the drying air duct near to the air return opening.

6. The efficient washer-dryer according to claim 2, wherein, the condensing device further comprises a heat-dissipating fan, and the heat-dissipating fan is arranged at the condensation section of the heat pipe group and the second heat exchanger sheet group for improving the heat dissipation of the condensation section of the heat pipe group and the second heat exchanger sheet group.

7. The efficient washer-dryer according to claim 1, further comprising a heating device arranged in the drying air duct,
wherein the heating device is arranged downstream from the condensing device, a fan is arranged in the drying air duct to drive drying air flow to circulate between the drying air duct and the laundry accommodating drum.

8. A control method of the efficient washer-dryer according to any one of claims from 1 to 7, comprising:
at least after a drying process, supplying water to the nozzle to flush dirt attached on the condensing device, and discharging flushing water and the dirt out of the drying air duct through the drain outlet.

9. The control method of the efficient washer-dryer according to claim 8, further comprising:
firstly heating the flushing water supplied to the nozzle, and/or supplying water to the nozzle in an intermittent manner, before supplying water to the nozzle.

10. The control method of the efficient washer-dryer according to any one of claims from 1 to 7, comprising:
supplying water to the nozzle at an earlier stage of drying process, and distributing water to the condensing device to condense moisture of air discharged from the laundry accommodating drum.

11. The control method of the efficient washer-dryer according to any one of claims from 1 to 7, comprising:
supplying water to the nozzle at a later stage of drying process, and distributing water to the condensing device to cool the air discharged from the laundry accommodating drum.
